# EUROPEAN PATENT APPLICATION

(11) **EP 4 811 625 A1**
(43) Date of publication of application: **23.09.2026**
(21) Application number: 23958465.9
(22) Date of filing: 13.11.2023
(51) Int. Cl.: H02K 11/20, G06N 20/00, G06F 17/40, H02P 29/024

(54) **SYSTEM AND METHOD FOR MONITORING THE OPERATING CONDITION OF ROTARY ELECTRICAL MACHINES AND AUTOMATIC DETECTION OF MECHANICAL AND ELECTRICAL FAULTS**

(71) Applicant: 2Neuron Solucoes Em Inteligencia Artificial Ltda, 29.090-100 Vitória - ES (BR)
(72) Inventor: LUDUVICO COELHO, Yves, 29060810 Vitória - ES (BR); COIMBRA CARVALHO, Gabriel, 29065440 Vitória - ES (BR)
(74) Representative: KIPA AB
(86) International application number: PCT/BR2023/050387
(87) International publication number: WO 2025/102127

(57) **Abstract**

The present invention pertains to methods for operation, maintenance, and monitoring of rotating electrical machines, and relates to a system and a method for monitoring the operational condition and detecting mechanical, electrical, load, and process faults in rotating electrical machines. The proposed system and method, together, provide a more effective way to detect faults early on, with greater installation convenience and scalability than prior art methods, and are more efficient in avoiding production losses, improving operational performance and preventing damage to equipment and risks to operators. The developed method continuously collects electrical current and voltage signals that power the machine, utilizing a data acquisition module and current and voltage transformers. The collected data undergoes stages of compression, encryption, application of Fast Fourier Transform (FFT), subsampling, feature extraction, anomaly detection using statistical and machine learning techniques, and fault classification using machine learning techniques. The proposed system consists of one or more data acquisition modules, one or more gateway devices, a processing center on a cloud computing platform, and an operator interface. **In** an industrial application, the method can be continually improved with the collection of new data and with validation information from an operator in the face of an identified fault.

## Description

### Field of the Invention

The present invention pertains to methods of operation, maintenance, and monitoring of rotating electric machines, and relates to a system and method for monitoring the operational condition and detecting mechanical, electrical, load, and process failures in rotating electric machines.

### Background of the Invention

A rotating electric machine is intended to convert electrical energy into mechanical energy, or vice versa, and is essentially composed of a fixed part, called the stator, and a moving part, known as the rotor, which rotates along an axis.

Induction electric motors are rotating electric machines, powered by alternating current, which produce torque and mechanical power through the electromechanical conversion of energy. Such motors are widely used in various industries to provide mechanical power to equipment such as pumps, fans, conveyor belts, agitators, reducers, compressors, elevators, among others.

In induction electric motors, the alternating current applied to the stator windings is induced in the rotor by the transformer action between the coils of these parts. The current induced in the rotor generates a magnetic flux, which seeks to align itself with the rotating magnetic field of the stator, causing rotational movement in the rotor. The rotor shaft is connected to a load through a coupling.

On the other hand, conversely, in induction generators, a primary mechanical machine promotes the rotation of the rotor. Thus, in the presence of residual electrical energy, the rotor coils induce alternating current in the stator windings through transformer action, generating electrical energy.

As rotating electric machines have moving parts in contact with stationary parts, occasional friction between the rotating part and static components occurs. For this reason, the machine experiences dynamic and frictional forces, often leading to conditions conducive to mechanical failures, such as imbalance, misalignment, wear, loosening of the housing or moving components, corrosion, blockage, obstruction, overheating, and other phenomena that can result in failures.

Rotating electric machines are also susceptible to a variety of electrical failures. Among these, the following stand out: phase imbalance, voltage transients, harmonic distortion, Sigma currents, and overload. Phase imbalance can lead to conductor overheating and melting, often resulting from design flaws and unexpected load additions. Voltage transients are surges originating from external sources and oscillations caused by load switching maneuvers and capacitor bank switching. This transient effect can lead to insulation breakdown and medium to long-term failures. Harmonic distortion arises from capacitive and inductive components in the line, as well as from electronic loads containing diodes and transistors that cause discontinuities in the electric current. These harmonics represent energy losses that over time lead to motor efficiency loss and insulation deterioration. Sigma currents are parasitic currents present in the motor conductors and can result in efficiency loss and reduced motor lifespan. To prevent them, conductors must be properly sized, and connections well-executed. Finally, overload occurs when a motor operates above its rated torque and current, leading to overheating and reducing its lifespan. Frequent electrical failures contribute to the deterioration of parts in the rotating electric machine, causing failures such as broken rotor bars and damage to and burning of the stator windings.

Therefore, in an industrial plant where a conglomerate of rotating electric machines is installed and operating, mechanical and electrical failures, and consequently, unplanned production downtime, represent significant financial losses for companies. This often entails production loss, high repair costs, the need to acquire replacement parts or a new machine, and potential risks to operators exposed to the failure. Given this scenario, well-executed preventive and predictive maintenance is crucial to ensure asset availability, production efficiency, and safety for operators and maintainers. Typically, preventive and predictive monitoring services for mechanical and electrical issues in rotating electric machines are conducted periodically and utilize vibration analysis, thermographic inspection, and electrical signature analysis (ESA).

In the present invention, a system and method have been developed for monitoring the operational condition of rotating electric machines and automatically detecting mechanical and electrical faults. The developed method continuously collects electrical current and voltage signals feeding the machine at a high sampling rate and resolution, using a data acquisition module and transducers installed in the motor control cabinet. The collected, processed, and pre-processed electrical current and voltage signals are applied to intelligent machine learning-based models on cloud servers for fault identification and classification.

The method developed in this invention can detect mechanical and electrical issues in rotating electric machines at an early stage. In the presence of faults, vibrations and anomalies arise that affect the air gap between the stator and rotor of the machine, causing disruptions in the magnetic field. These disturbances affect the behavior of electrical current and voltage, introducing patterns associated with faults that can be identified early by the machine learning-based method developed. Furthermore, electrical faults are detected much more accurately and efficiently compared to other methods, as they directly affect the motor's magnetic field and, consequently, the electrical current and voltage, which the developed system continuously monitors.

The system and method developed offer a range of advantages over traditional processes and even those more recently adopted by the industry. Installing the data acquisition module in the motor control cabinet provides greater convenience, agility, and safety in system installation. It also facilitates the installation of the monitoring system in hard-to-reach and highly hazardous and unsanitary locations. Additionally, the transducers are not exposed to adverse conditions typical of locations with extremely high temperatures or submerged installations.

Another advantage of the method developed, offered by the installation of the data acquisition module in the motor control cabinet, is the ability to monitor a series of coupled machines using only one monitoring device. For example, a motor-reducer-agitator assembly can be monitored by applying the method to the electrical signals that power the line, without the need to install a sensor on each machine, as the torque generated by the electromechanical energy conversion in these machines is derived from the same electrical energy source. Furthermore, the developed method can identify the machine in a faulty condition and the type of fault, as each machine-fault combination presents a specific electrical signature in the collected signals.

Building a database of electrical signals collected from rotating electric machines with a wide variety of operational conditions and fault conditions, together with the use of machine learning techniques, allows for the construction of a robust, accurate, and efficient model for diagnosing faults even at an early stage. During operation, the continuous data collection makes the developed method even more accurate, as the machine learning-based model can be improved with new data generated continuously by the monitored machine.

In addition to providing continuous monitoring with early fault diagnosis in rotating electric machines, the present invention also offers power quality analysis and machine performance metrics, allowing operators to make more informed decisions based on data, resulting in a more efficient operation in terms of production and energy consumption.

### Brief Description of the Drawings

The figures and flowcharts contained in this patent application are briefly described as follows:
Figure 1 provides an illustrative example of the overall view of the proposed system, according to a primary embodiment.
Figure 2 illustrates an example of the overall view of the proposed system, according to a secondary embodiment.
Figure 3 depicts the installation of the data acquisition module in the motor control cabinet, according to one embodiment.
Figure 4 reveals the data acquisition module and its components, according to one embodiment.
Figure 5 presents the flowchart of the data collection and data processing process locally, according to one embodiment.
Figure 6 shows the flowchart of the data processing steps in the processing center on the cloud computing platform, according to one embodiment.
Figure 7 displays the flowchart of the machine learning model training and application process, according to one embodiment.
Figure 8 provides the flowchart of the fault detection process and operator validation, according to one embodiment.

### Description of the Invention

The present invention, called "System and Method for Monitoring the Operational Condition of Rotating Electrical Machines and Automatic Detection of Mechanical and Electrical Faults", comprises a system and a method for continuous monitoring of current and electrical voltage of industrial rotating electrical machines from the motor control cabinet, and diagnosis of an extensive range of faults originating from the machine itself, the driven load, the process, or other elements connected in the line, even in the development stage.

The proposed system and method together provide a way to detect faults early and more accurately, with greater installation convenience, greater scalability than prior art methods, and are more efficient in preventing production losses, improving operational performance, and preventing equipment damage and operator risks.

The monitored rotating electrical machines may include, but are not limited to, induction electric motors, generators, pumps, fans, conveyor belts, agitators, reducers, elevators, turbines, compressors, and gearboxes.

Among the faults detected by the proposed method are, but not limited to, wear, scratches and bearing failures, bearing failure, eccentricities, broken rotor bars, shaft misalignment, shaft unbalance, shaft play, soft foot, overload, voltage transients, phase unbalance, harmonic distortion, Sigma currents, pump cavitation, pump clogging, part corrosion, resonance, seal assembly failure, leakage, rotary looseness, structural looseness, operator failure.

In summary, the developed method continuously collects electrical current and voltage signals feeding a rotating electrical machine, at a high sampling rate and high resolution, from a data acquisition module, current transformers, and voltage transformers installed in the motor control cabinet. The collected signals are subsequently processed in a processing center, where machine learning models are applied for fault classification.

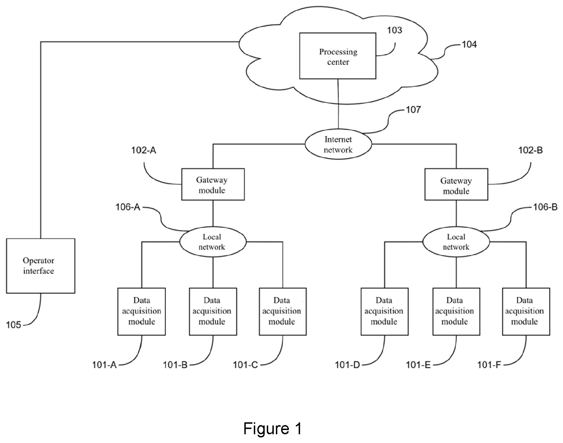

Figure 1 illustrates an example of the overall view of the proposed system, according to a main embodiment. In this main embodiment, the proposed system consists of N data acquisition modules (101) and M gateway modules (102) in the industrial plant, a processing center (103) on a cloud computing platform (104), and an operator interface (105). In this embodiment, each gateway device (102) communicates with a group of n data acquisition modules (101) through a local network (106), and with the processing center (103) through the internet network (107). The numbers N and M vary, respectively, according to the number of data acquisition modules (101) and gateway devices (102) installed in the industrial plant. The number n varies according to network and signal quality constraints, such as distance, physical barriers, and electromagnetic emissions between the devices themselves, as well as in the environment in which they are located, in addition to hardware limitations. In the illustrative example of Figure 1, N is equal to 6, M is equal to 2, and n is equal to 3.

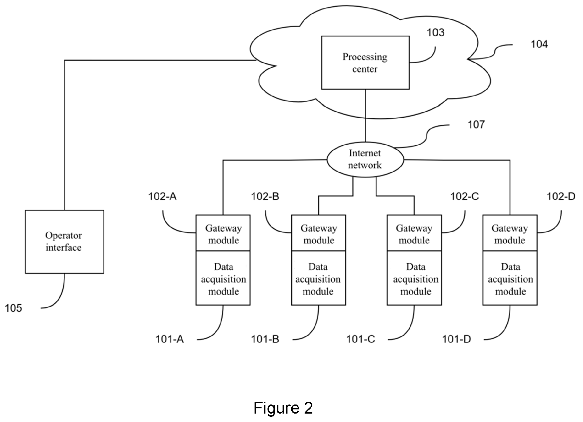

Figure 2 presents an illustrative example of the overall view of the proposed system, according to a secondary embodiment. In this secondary embodiment, the proposed system consists of N data acquisition modules (101), individually attached to N gateway devices (102) in the industrial plant, a processing center (103) on a cloud computing platform (104), and an operator interface (105). The gateway device (102) communicates with the processing center (103) via the internet network (107). The number N varies according to the number of data acquisition modules (101) installed in the industrial plant. In the illustrative example of Figure 2, N is equal to 4.

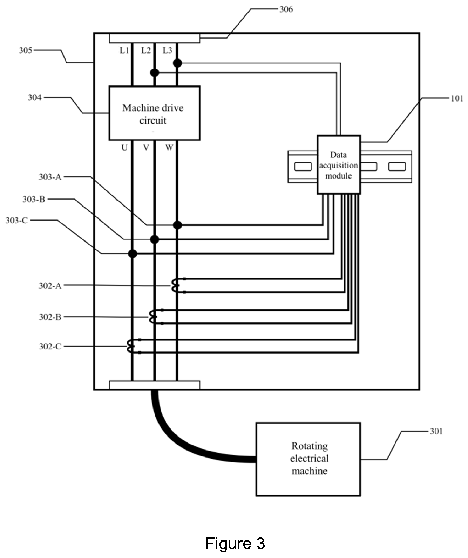

Figure 3 presents the installation of a data acquisition module (101) adapted to monitor a three-phase rotating electrical machine (301), according to a preferred embodiment. In this embodiment, the data acquisition module (101) is installed inside the electrical panel (305) where a machine drive circuit (304) is located. The machine drive circuit (304) receives three-phase electrical power from the electrical network input (306).

In one embodiment, current transformers (CTs) (302) are installed on each phase conductor of the machine drive circuit (304) that powers the rotating electrical machine (301). The CTs can be of the split-core or closed-core type, or even Rogowski coils, any of these of various types, categories, and sizes, depending on the current intensity to be measured.

In one embodiment, branching points on the conductors (303) are performed on each phase conductor to derive the electrical voltage information to the data acquisition module (101). The branching points on the conductors (303) can be made from the output connections of the machine drive circuit (304), or from connections made directly to the power conductors of the rotating electrical machine (301).

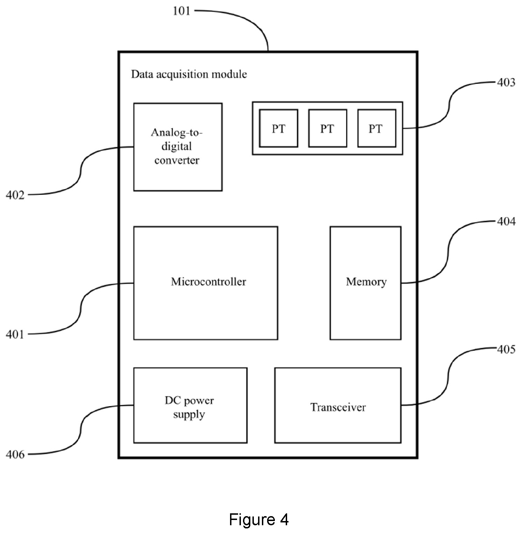

Figure 4 presents the data acquisition module (101) according to a preferred embodiment. In this preferred embodiment, the data acquisition module (101) is composed of a microcontroller (401), an analog-to-digital converter (402), a set of three potential transformers (PTs) (403), a memory (404), a transceiver (405), and a direct current (DC) power supply (406).

In one embodiment, the microcontroller is responsible for executing the data collection control steps and communication with the other components of the data acquisition module (101).

In one embodiment, the set of PTs (403) receives the electrical voltage signals derived from the branching points on the conductors (303) of each phase conductor that powers the rotating electrical machine (301).

In one embodiment, the analog-to-digital converter (402) takes as input the analog signals captured from the secondary windings of the CTs (302) and the PTs (403), and converts them into digital signals, which are transferred to the microcontroller (401).

In one embodiment, the memory (404) stores the data collected by the data acquisition module (101).

In one embodiment, the transceiver (405) enables communication and data transfer between the data acquisition module (101) and the gateway device (102), and can be implemented in three configurations. In a first configuration, the transceiver (405) is a Wi-Fi communication module, enabling wireless connection of the data acquisition module (101) to the local network (106) to communicate with the gateway device (102). In a second configuration, the transceiver (405) is an Ethernet communication module, enabling the connection of the data acquisition module (101) to the local network (106) through a network cable to communicate with a gateway device (102). In a third configuration, the transceiver (405) is an adapter to physically connect the gateway device (102) to the data communication module (101), and provide communication between them.

In one embodiment, the DC power supply (406) is responsible for providing the appropriate electrical power for all components of the data acquisition module (101). The power source of the DC power supply (406) is the electrical network (306), available in the motor control cabinet (305) where the data acquisition module (101) is installed.

The processing center (103) is composed of various computing services and tools available on the cloud computing platform (104), and is accessed and operated in the cloud through the internet network (107). Among the services that make up the processing center are data ingestion, transformation, storage, processing, and analysis, as well as training and execution of machine learning models.

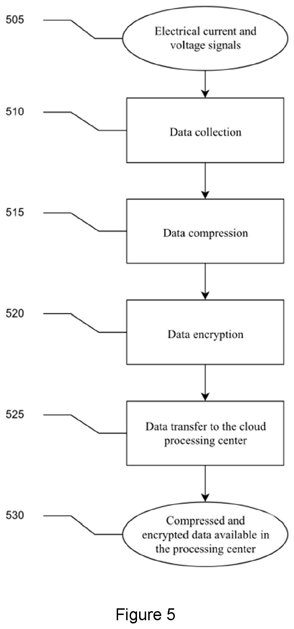

Figure 5 presents the flowchart of the process of data collection, processing, and transfer to the processing center (103), according to an embodiment. The input of this process is the electrical current and voltage signals (505) that power the rotating electrical machine (301). The data acquisition module (101) performs the data collection step (510) and transfers the data to the gateway device (102). This, in turn, performs the data compression step (515), data encryption (520), and data transfer to the cloud processing center (525). At the end of this process, the result is the compressed and encrypted data available in the processing center (530).

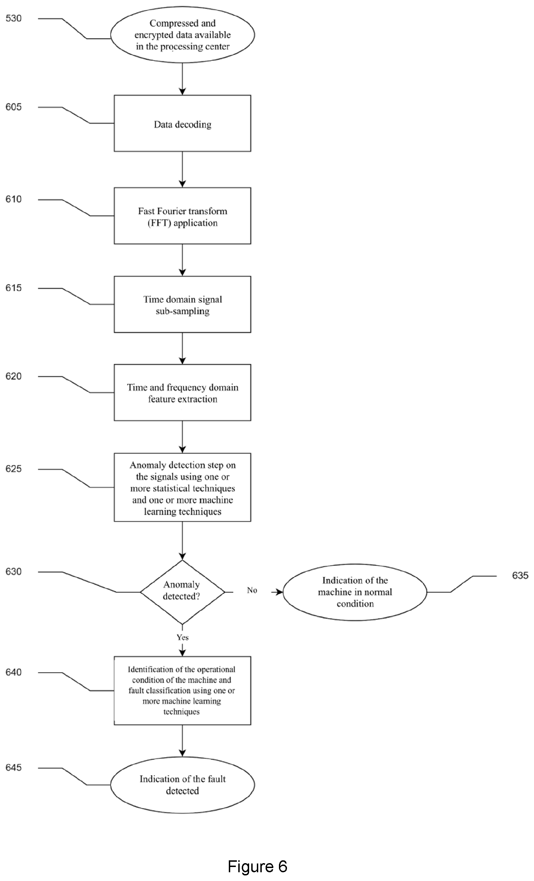

Figure 6 presents the flowchart of data processing in the processing center (103), according to an embodiment. The input of this process is the compressed and encrypted data available in the processing center (530), transmitted by the gateway device (102). In step 605, the processing center performs data decoding. Next, it performs the Fast Fourier Transform (FFT) application step (610) to obtain the frequency domain representation. It then performs the time domain signal subsampling step (615) and the time and frequency domain feature extraction step (620).

The feature extraction step of the signals in the time and frequency domain (620) includes one or more feature extraction and selection techniques, without limitation, such as mean, median, standard deviation, variance, kurtosis, skewness, covariance matrix, Fourier coefficients, natural frequency, fundamental frequencies, frequency harmonics.

In step 625, the processing center (103) performs the anomaly detection step in the signals with one or more statistical techniques and one or more machine learning techniques, using the data and attributes obtained up to the previous step.

In a secondary embodiment, step 625 may include the Principal Component Analysis (PCA) technique and an autoencoder neural network.

In case of undetected anomaly, the result of this process is the indication of the machine in normal condition (635).

In case of detected anomaly, the processing center (103) performs the step of identifying the operational condition of the machine and fault classification with one or more machine learning techniques (640), using the data and attributes obtained up to step 620.

In a secondary embodiment, step 640 may include convolutional neural networks and one or more boosting algorithms based on decision trees.

In step 645, the result will be the indication of the fault detected in the previous step.

The machine learning techniques applied in steps 625 and 640 may include other algorithms, without limitation, such as Artificial Neural Networks, Recurrent Neural Networks, Decision Trees, Random Forest, eXtreme Gradient Boosting (XGBoost), Light Gradient Boosting Machine (LightGBM), CatBoost, k-Nearest Neighbors (KNN), Naïve Bayes, and ensemble-type classifiers.

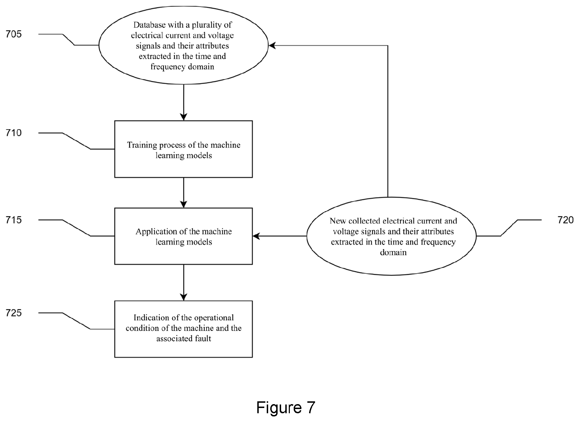

Figure 7 presents the flow of the process of training and application of machine learning models, according to an embodiment. In this embodiment, initially, the step of training the machine learning models (710) is executed, which are trained, optimized, and evaluated with a database with a plurality of electrical current and voltage signals and their attributes extracted in the time and frequency domain (705). When in production, the step of applying the machine learning models (715) to the new collected electrical current and voltage signals and their attributes extracted in the time and frequency domain (720) is executed. The new collected signals (720) are also stored in the processing center (103) and inserted into the database (705) in order to be used in a new process of training the machine learning models (710) for improvement and specialization of the machine learning models. At the end of the process, the step 725 is executed, indicating the operational condition of the machine and the associated fault.

The database with a plurality of electrical current and voltage signals and their attributes extracted in the time and frequency domain (705) covers a variety of collected data and attributes extracted from electrical current and voltage signals of a plurality of rotating electrical machines (301), of various types, with different loads, in various operational conditions, and under diverse conditions of mechanical, electrical, load, and process faults.

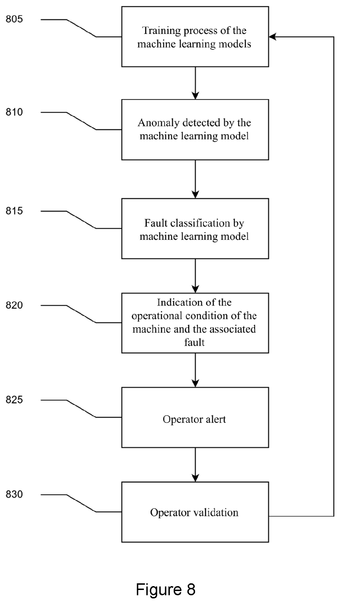

Figure 8 presents the flowchart of the fault detection process and operator validation, according to an embodiment. In this embodiment, initially, the training of the machine learning models (805) is executed. In step 810, the machine learning model detects an anomaly, and in step 815, the machine learning model classifies the identified fault. As a result, the step of indicating the operational condition of the machine and the associated fault (820) is executed. Next, the step of alerting the operator (825) is performed. Then, the operator receives the notification and evaluates the machine condition to execute step 830, operator validation. Based on the operator's validation, the machine learning models are trained with new collected data and with the information of the operational condition of the machine validated or rejected by the operator. This procedure contributes to the improvement and specialization of the model in the rotating electrical machine (301) being monitored.

## Claims

1. Method for monitoring the operational condition of rotating electrical machines and automatic detection of mechanical and electrical faults, **characterized by** comprising the steps of:
a. collecting data (510) from the electrical current and voltage signals (505) of a rotating electrical machine (301) with a data acquisition module (101);
b. transferring the data collected by the data acquisition module (101) to the gateway device (102);
c. in the gateway device (102), performing the steps of:
i. data compression (515);
ii. data encryption (520); and
iii. transferring data to the cloud processing center (525) via the internet (107);
d. in the processing center (103), performing the steps of:
i. data decoding (605);
ii. applying the Fast Fourier Transform (FFT) (610) to obtain the frequency domain representation;
iii. subsampling in the time domain (615); and
iv. extracting features from the signals in the time and frequency domains (620);
e. in the processing center (103), conducting the anomaly detection step on the signals using one or more statistical techniques and one or more machine learning techniques (625);
f. in the processing center (103), in case of detected anomaly, executing the step of identifying the operational condition of the machine and fault classification using one or more machine learning techniques (640).

2. Method according to claim 1, **characterized in that** the data acquisition module (101) is installed inside the motor control cabinet, (305), and collects electrical current and voltage signals (505) from a rotating electrical machine (301) with current transformers (CTs) (302) and branching points on the conductors (303) installed alongside the phase conductors for voltage sensing, also inside the motor control cabinet (305).

3. Method according to claim 1, **characterized in that** the step of anomaly detection in the signals using one or more statistical techniques and one or more machine learning techniques (625) includes the technique called Principal Component Analysis (PCA) and includes an autoencoder neural network.

4. Method according to claim 1, **characterized in that** the step of identifying the operational condition of the machine and fault classification using one or more machine learning techniques (640) includes convolutional neural networks and one or more boosting algorithms based on decision trees.

5. Method according to claim 1, **characterized in** obtaining operator validation (830) regarding the detected faults, and inserting the received validation, together with new collected data from the faulty machine, into the training process of the machine learning models (805).

6. Method according to claim 1, **characterized in that** the data transfer between the data acquisition module (101) and the gateway device (102) occurs remotely through a local communication network (106) wirelessly or wired.

7. Method according to claim 1, **characterized in that** the rotating electrical machine is an induction electric motor, a generator, a pump, a fan, a conveyor belt, an agitator, a reducer, an elevator, a turbine, a compressor, a gearbox.

8. Method according to claim 1, **characterized in that** the operational condition of the machine includes wear, risks, and faults in bearings, bearing failure, eccentricities, broken bars in the rotor, shaft misalignment, shaft unbalance, shaft clearance, soft foot, overload, voltage transients, phase unbalance, harmonic distortion, Sigma currents, pump cavitation, pump clogging, corrosion of parts, resonance, seal assembly failure, leakage, rotational looseness, structural looseness, operator error.

9. System for monitoring the operational condition of rotating electrical machines and automatic detection of mechanical and electrical faults, **characterized by** comprising:
a. a data acquisition module (101) for collecting electrical current and voltage signals and transferring the data of electrical current and voltage signals to the gateway device (102);
b. a gateway device (102) for compressing the electrical current and voltage data, encrypting the electrical current and voltage data, and transferring the electrical current and voltage data to the processing center (103);
c. a processing center (103) on a cloud computing platform (104):
i. wherein the electrical current and voltage data is decoded (605);
ii. wherein FFT is performed (610);
iii. wherein the electrical current and voltage data is subsampled in the time domain (615);
iv. wherein attributes of the signals are extracted in the time and frequency domains (620);
v. wherein one or more statistical techniques and one or more machine learning techniques are implemented for anomaly detection in the electrical current and voltage signals (625);
vi. wherein one or more machine learning techniques are implemented for identifying the operational condition of the machine and fault classification (640).

10. System according to claim 9, **characterized in that** the data acquisition module (101) is installed in the motor control cabinet (305) and collects electrical current and voltage data from a rotating electrical machine (301) with CTs (303) and voltage transformers (304) installed alongside the phase conductors that power the rotating electrical machine (301).

11. System according to claim 9, **characterized in that** the processing center (103) is adapted to perform Principal Component Analysis (PCA) and an autoencoder neural network in the anomaly detection step using one or more statistical techniques and one or more machine learning techniques (625).

12. System according to claim 9, **characterized in that** the processing center (103) is adapted to apply convolutional neural networks and one or more boosting algorithms based on decision trees in the step of identifying the operational condition of the machine and fault classification using one or more machine learning techniques (640).

13. System according to claim 9, **characterized in that** the processing center is adapted to obtain operator validation (830) regarding the detected faults, and insert the received validation, together with new collected data from the faulty machine, into the training process of the machine learning models (805).

14. System according to claim 9, **characterized in that** the gateway device (102) communicates remotely with the data acquisition module (101) through a local communication network (106) wirelessly or wired.

15. System according to claim 9, **characterized in that** the rotating electrical machine (301) is an induction electric motor, a generator, a pump, a fan, a conveyor belt, an agitator, a reducer, an elevator, a turbine, a compressor, a gearbox.

16. System according to claim 9, **characterized in that** the operational condition of the machine includes wear, risks, and faults in bearings, bearing failure, eccentricities, broken bars in the rotor, shaft misalignment, shaft unbalance, shaft clearance, soft foot, overload, voltage transients, phase unbalance, harmonic distortion, Sigma currents, pump cavitation, pump clogging, corrosion of parts, resonance, seal assembly failure, leakage, rotational looseness, structural looseness, operator error.
